(19) Europäisches Patentamt
European Patent Office
Office européen des brevets

(11) **EP 4 625 336 A1**

(12) **EUROPEAN PATENT APPLICATION**
published in accordance with Art. 153(4) EPC

(43) Date of publication:
**01.10.2025 Bulletin 2025/40**

(21) Application number: **23893758.5**

(22) Date of filing: **17.11.2023**

(51) International Patent Classification (IPC):
**G06T 13/40** (2011.01)     **G06V 40/16** (2022.01)

(52) Cooperative Patent Classification (CPC):
**G06V 40/174; G06F 18/00; G06T 13/40;
G06V 10/82; G06V 40/176;** Y02T 10/40

(86) International application number:
**PCT/CN2023/132455**

(87) International publication number:
**WO 2024/109668 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 CN 202211491847**

(71) Applicant: **Beijing Zitiao Network Technology Co., Ltd.
Beijing 100190 (CN)**

(72) Inventors:
• **CHEN, Peibin
Beijing 100028 (CN)**
• **ZHANG, Xijin
Beijing 100028 (CN)**
• **LENG, Fuxing
Beijing 100028 (CN)**

(74) Representative: **Marks & Clerk LLP
15 Fetter Lane
London EC4A 1BW (GB)**

(54) **EXPRESSION DRIVING METHOD AND APPARATUS, AND DEVICE AND MEDIUM**

(57)     Embodiments of the present disclosure relate to an expression driving method and apparatus, a device, and a medium. The method includes: obtaining a target image, and recognizing an expression of a target object in the target image to obtain at least one expression coefficient; extracting an expression coefficient to be processed from the at least one expression coefficient, and determining an initial left expression coefficient and an initial right expression coefficient in the expression coefficient to be processed; generating a target left expression coefficient and a target right expression coefficient based on a similarity between the initial left expression coefficient and the initial right expression coefficient; and driving a virtual character to show a corresponding expression based on the target left expression coefficient and the target right expression coefficient.

Obtain a target image, and recognize an expression of a target object in the target image to obtain at least one expression coefficient — 101

Extract an expression coefficient to be processed from the at least one expression coefficient, and determine an initial left expression coefficient and an initial right expression coefficient in the expression coefficient to be processed — 102

Generate a target left expression coefficient and a target right expression coefficient based on a similarity between the initial left expression coefficient and the initial right expression coefficient — 103

Drive a virtual character to show a corresponding expression based on the target left expression coefficient and the target right expression coefficient — 104

FIG. 1

EP 4 625 336 A1

**Description**

The present application claims priority to Chinese Patent Application No. 202211491847.5, filed with the China National Intellectual Property Administration on November 25, 2022 and entitled "EXPRESSION DRIVING METHOD AND APPARATUS, DEVICE, AND MEDIUM", which is incorporated herein by reference in its entirety.

**FIELD**

The present disclosure relates to the field of image processing technologies, and in particular, to an expression driving method and apparatus, a device, and a medium.

**BACKGROUND**

With continuous development of Internet technology and artificial intelligence technology, a virtual character of a target object can be generated and driven in some scenarios to achieve a better human-computer interaction effect.
Expression driving can be understood as obtaining a facial expression image of a target object through an image acquisition device, then obtaining expression driving data (for example, an expression coefficient) by means of an algorithm, and driving a virtual character of the target object (for example, a three-dimensional virtual face model of the target object) using the expression driving data, so that the driven virtual character can show an expression consistent with that of the target object.

**SUMMARY**

The present disclosure provides an expression driving method and apparatus, a device, and a medium.
An embodiment of the present disclosure provides an expression driving method. The method includes:

obtaining a target image, and recognizing an expression of a target object in the target image to obtain at least one expression coefficient;

extracting an expression coefficient to be processed from the at least one expression coefficient, and determining an initial left expression coefficient and an initial right expression coefficient in the expression coefficient to be processed;

generating a target left expression coefficient and a target right expression coefficient based on a similarity between the initial left expression coefficient and the initial right expression coefficient; and

driving a virtual character to show a corresponding expression based on the target left expression coefficient and the target right expression coefficient.

An embodiment of the present disclosure further provides an expression driving apparatus. The apparatus includes:

a recognition module configured to obtain a target image, and recognize an expression of a target object in the target image to obtain at least one expression coefficient;

a determination module configured to extract an expression coefficient to be processed from the at least one expression coefficient, and determine an initial left expression coefficient and an initial right expression coefficient in the expression coefficient to be processed;

a processing module configured to generate a target left expression coefficient and a target right expression coefficient based on a similarity between the initial left expression coefficient and the initial right expression coefficient; and

a driving module configured to drive a virtual character to show a corresponding expression based on the target left expression coefficient and the target right expression coefficient.

An embodiment of the present disclosure further provides an electronic device. The electronic device includes: a processor; and a memory configured to store instructions executable by the processor, where the processor is configured to read the executable instructions from the memory, and execute the instructions to implement the expression driving method provided in the embodiments of the present disclosure.

An embodiment of the present disclosure further provides a computer-readable storage medium storing a computer program for performing the expression driving method provided in the embodiments of the present disclosure.

**BRIEF DESCRIPTION OF THE DRAWINGS**

The foregoing and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.

FIG. 1 is a schematic flowchart of an expression driving method according to an embodiment of the present disclosure;

FIG. 2 is a schematic flowchart of another expression driving method according to an embodiment of the present disclosure;

FIG. 3 is a schematic diagram of expression driving according to an embodiment of the present disclosure;

FIG. 4 is a schematic diagram of comparison according to an embodiment of the present disclosure;

FIG. 5 is a schematic diagram of a structure of an expression driving apparatus according to an embodiment of the present disclosure; and

FIG. 6 is a schematic diagram of a structure of an electronic device according to an embodiment of the present disclosure.

**DETAILED DESCRIPTION OF EMBODIMENTS**

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

Research has found that due to lack of relational constraints on expression coefficients between parts, in some cases, expression driving on a virtual character may result in inconsistency and asynchrony between related parts of a face, leading to an unrealistic driving effect. For example, as left and right eyes of a real person have basically the same size during normal eye opening or blinking of the person, different sizes of the left and right eyes driven may create a display effect that greatly affects the user experience. In the related art, in order to solve the above problem, consistency constraints may be directly imposed based on the relationship between the parts. For example, for eye driving, expression driving coefficients corresponding to the left and right eyes are averaged, and the averaged coefficient is then assigned to the original coefficients for the left and right eyes, to ensure that the left and right eyes are identical in size. However, the above method has a relatively limited scope and may result in the failure of a part of an expression, for example, of an expression with one eye closed, leading to an unrealistic driving effect and hindering the ability to capture user emotions.

In order to solve the above problem, the embodiments of the present disclosure provide an expression driving method. The method is described below with reference to specific embodiments.

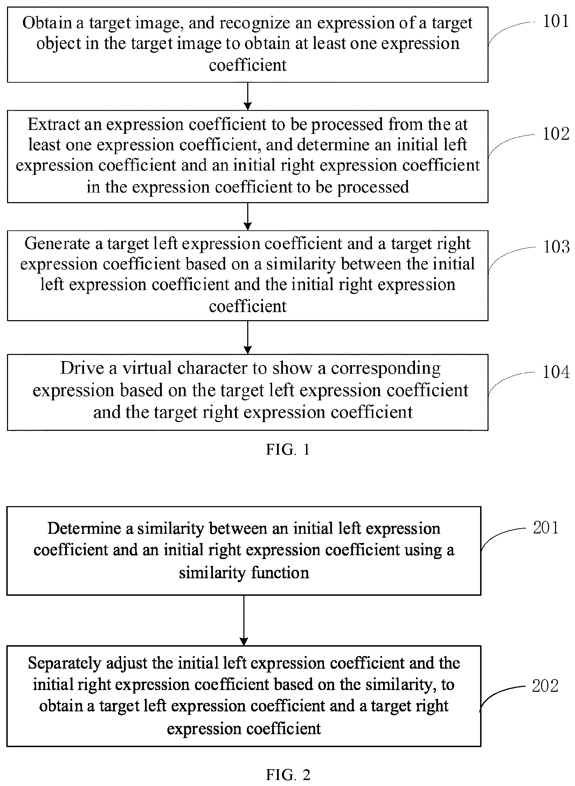

FIG. 1 is a schematic flowchart of an expression driving method according to an embodiment of the present disclosure. The method may be performed by an expression driving apparatus, which may be implemented using software and/or hardware and may generally be integrated into an electronic device. As shown in FIG. 1, the method includes the following steps.

Step 101: Obtain a target image, and recognize an expression of a target object in the target image to obtain at least one expression coefficient.

An expression can be understood as a subjective external manifestation of an emotion. The expression in this embodiment of the present disclosure refers to facial expression. For example, an orangutan may express emotions such as happiness, sadness, and anger through facial expressions. The target image may be a two-dimensional image including a face region of the target object, and the target image needs to be subjected to expression recognition. The target image may be obtained by photographing the face region of the target object through an image acquisition apparatus. The target object may be determined according to actual situations. For example, the target object may be an authorized user, but is not limited to a user, for example, may be an orangutan or other objects.

The expression coefficient may be a coefficient obtained by performing expression feature extraction on an image using a computer, and the expression coefficient can be understood as descriptive information of an expression interpretable to the computer. An intelligent human-computer interaction environment may be established through the expression coefficient.

In this embodiment of the present disclosure, recognizing the expression of the target object in the target image to obtain at least one expression coefficient may include: inputting the target image into a pre-trained expression recognition network to obtain the at least one expression coefficient.

The expression recognition network may be a pre-created and trained neural network for expression feature extraction. The expression recognition network specifically used in this embodiment of the present disclosure is not limited thereto. For example, a convolutional neural network may be used.

Specifically, the expression driving apparatus may obtain the target image. There is no limitation on the manner of obtaining the target image. For example, the target image may be acquired in real time or may be uploaded. The target image may be a single image, or a sequence of images extracted from a video, which is not limited thereto. Then, the target image including the target object may be input into the expression recognition network, to output an expression coefficient corresponding to the target image. The expression coefficient may include expression coefficients corresponding to various parts, and the specific number thereof is not limited, for example, including an expression coefficient for a nose and an expression coefficient for a mouth.

Step 102: Extract an expression coefficient to be processed from the at least one expression coefficient, and determine an initial left expression coefficient and an initial right expression coefficient in the expression coefficient to be processed.

The expression coefficient to be processed can be understood as an expression coefficient on which a certain relational constraint needs to be imposed. That is to say, in some cases, the use of the expression coefficient to be processed for expression driving may result in inconsistency and asynchrony. The initial left expression coefficient and the initial right expression coefficient may be initial coefficients obtained after the expression coefficient to be processed is divided into left and right based on semantic information of the expression coefficient to be processed. The initial left expression coefficient corresponds to an initial left-half expression coefficient, and the initial right expression coefficient corresponds to an initial right-half expression coefficient.

In this embodiment of the present disclosure, extracting the expression coefficient to be processed from the at least one expression coefficient may include: extracting an expression coefficient for a preset part from the at least one expression coefficient to obtain the expression coefficient to be processed, where the preset part has two symmetrical subparts, namely, a left subpart and a right subpart.

The preset part can be understood as a facial part in the face that is divided into two subparts, namely, a left subpart and a right subpart, which may be left-and-right symmetrical, and each subpart may act independently and be less affected by the other subpart. For example, the preset part may include eyes, eyebrows, a mouth, a nose, or the like. After the at least one expression coefficient is obtained, the expression coefficient for the preset part in the at least one expression coefficient may be extracted as the expression coefficient to be processed. Then, the initial left expression coefficient and the initial right expression coefficient in the expression coefficient to be processed may be determined based on the semantic information of the expression coefficient to be processed.

Step 103: Generate a target left expression coefficient and a target right expression coefficient based on a similarity between the initial left expression coefficient and the initial right expression coefficient.

The target left expression coefficient may be a new expression coefficient obtained by dynamically adjusting the initial left expression coefficient, and the target right expression coefficient may be a new expression coefficient obtained by dynamically adjusting the initial right expression coefficient.

Specifically, after dividing the expression coefficient to be processed into the initial left expression coefficient and the initial right expression coefficient, the expression driving apparatus may first determine the similarity between the initial left expression coefficient and the initial right expression coefficient, and process the initial left expression coefficient and the initial right expression coefficient accordingly based on the similarity, to obtain the target left expression coefficient and the target right expression coefficient.

In some embodiments, the initial left expression coefficient includes a plurality of pieces of left dimension data, the initial right expression coefficient includes a plurality of pieces of right dimension data, the quantity of the plurality of pieces of left dimension data is the same as the quantity of the plurality of pieces of right dimension data, and each piece of left dimension data corresponds to one piece of right dimension data. The similarity between the initial left expression coefficient and the initial right expression coefficient is determined in units of a dimension data pair, there are a plurality of dimension data pairs, and each dimension data pair includes corresponding one piece of left dimension data and one piece of right dimension data.

The initial left expression coefficient and the initial right expression coefficient may each include data in a plurality of dimensions, with the same number of dimensions, and the plurality of pieces of left dimension data are in a one-to-one correspondence with the plurality of pieces of right dimension data, that is, there is one piece of corresponding right dimension data for each piece of left dimension data. For example, assuming that the expression coefficient to be processed corresponds to eyes, the initial left expression coefficient corresponds to the left eye, and the initial right expression coefficient corresponds to the right eye, the plurality of pieces of left dimension coefficients included in the initial left expression coefficient may be a left eye blinking coefficient, a left eye upward looking coefficient, a left eye squinting coefficient, etc., and the plurality of pieces of right dimension coefficients included in the initial right expression coefficient may be a right eye blinking coefficient, a right eye upward looking coefficient, a right eye squinting coefficient, etc. The left eye blinking coefficient corresponds to the right eye blinking coefficient, the left eye upward looking coefficient corresponds to the right eye upward looking coefficient, and the left eye squinting coefficient corresponds to the right eye squinting coefficient.

When determining the similarity between the initial left expression coefficient and the initial right expression coefficient, the expression driving apparatus may first extract, as a dimension data pair, each piece of left dimension data in the initial left expression coefficient and its corresponding right dimension data in the initial right expression coefficient to obtain a plurality of dimension data pairs, and then, the expression driving apparatus may determine a single similarity for each dimension data pair in sequence in units of the dimension data pair to obtain a plurality of single similarities, i.e., the similarity between the initial left expression coefficient and the initial right expression coefficient. Then, the initial left expression coefficient and the initial right expression coefficient may also be separately adjusted based on the similarity in units of the dimension data pair. That is, the left dimension data and the right dimension data included in the corresponding dimension data pair may be adjusted based on each single similarity, to obtain the adjusted left dimension data and the adjusted right dimension data, thereby obtaining the adjusted target left expression coefficient based on a plurality of pieces of adjusted left dimension data, and obtaining the adjusted target right expression coefficient based on a plurality of pieces of adjusted right dimension data.

When the similarity is larger, the target left expression coefficient and the target right expression coefficient are closer to an average value of the initial left expression coefficient and the initial right expression coefficient. On the contrary, when the similarity is smaller, the target left expression coefficient is closer to the initial left expression coefficient and the target right expression coefficient is closer to the initial right expression coefficient. That is, when the difference between the initial left expression coefficient and the initial right expression coefficient is large, the output similarity is close to 0. In this case, the target left expression coefficient and the target right expression coefficient basically does not require adjustment of the initial left expression coefficient and the initial right expression coefficient, that is, the initial expression coefficients are basically unchanged, to avoid the failure of a specific expression, such as an expression made only by the left or right subpart of the preset part corresponding to the expression coefficient to be processed. In some specific examples, the specific expression includes an expression with one eye closed, an expression with a crooked smile, and the like.

Compared with the prior art, the technical solution provided in this embodiment of the present disclosure has the following advantages. In the expression driving solution provided in the embodiment of the present disclosure, the target image is obtained, and the expression of the target object in the target image is recognized to obtain the at least one expression coefficient; the expression coefficient to be processed is extracted from the at least one expression coefficient, and the initial left expression coefficient and the initial right expression coefficient in the to-be-processed expression coefficients are determined; the target left expression coefficient and the target right expression coefficient are generated based on the similarity between the initial left expression coefficient and the initial right expression coefficient; and the virtual character is driven to show the corresponding expression based on the target left expression coefficient and the target right expression coefficient. In the above technical solution, by dividing the expression coefficient to be processed in the expression coefficient into left and right expression coefficients, then generating new left and right expression coefficients based on a similarity between the left and right expression coefficients, and performing expression driving on a virtual character based on the new expression coefficients, post-processing relational constraints on recognized expression coefficients are achieved, which can improve the consistency and synchronization of expressions between related parts of the face during subsequent expression driving using the new expression coefficients, and can avoid a possible expression failure, thereby improving the authenticity of expression driving.

Exemplarily, FIG. 2 is a schematic flowchart of another expression driving method according to an embodiment of the present disclosure. As shown in FIG. 2, in a feasible implementation, the above step 103 may include the following steps.

Step 201: Determine the similarity between the initial left expression coefficient and the initial right expression coefficient using a similarity function.

The similarity function can be understood as a function that determines the similarity between two pieces of data. In this embodiment of the present disclosure, the similarity function is used to determine the similarity between the initial left expression coefficient and the initial right expression coefficient, and there is no limitation on the specific function to be used. The similarity function in this embodiment of the present disclosure may be a decreasing linear function or nonlinear function. For example, the linear function may be a function with a polynomial of degree 1, and the nonlinear function may be an exponential function, a logarithmic function, or the like.

In some embodiments, determining the similarity between the initial left expression coefficient and the initial right expression coefficient using the similarity function may include: determining a difference between the initial left expression coefficient and the initial right expression coefficient; and modulating the difference using a modulation parameter, and calculating the modulated difference as a variable of the similarity function to obtain the similarity between the initial left expression coefficient and the initial right expression coefficient.

The modulation parameter may be a parameter used to set a smoothing strength of the similarity function, and a larger modulation parameter indicates a smaller smoothing strength. In this embodiment of the present disclosure, the modulation parameter may correspond to a specific expression coefficient to be processed, that is, when there are different expression coefficients to be processed, the corresponding modulation parameters may also be different, and may specifically be related to preset parts corresponding to the expression coefficients to be processed, so that initial expression coefficients for different parts can be dynamically adjusted to different degrees in the subsequent implementation. For example, when the left and right subparts of a preset part generally have a high consistency in action, the modulation parameter corresponding to the expression coefficient to be processed for the part may be set smaller. For example, if the part is eyes or eyebrows, the modulation parameter therefor may be set to 4. However, when the left and right subparts of a part generally have a low consistency in action, that is, a great difference in action, the modulation parameter corresponding to the expression coefficient to be processed for the part may be set larger. For example, if the part is a mouth, the modulation parameter may be set to 8.

Optionally, the modulation parameter may be preset empirically, or may be determined as a user-adjustable parameter, for example, determined by the user in the form of interaction. Exemplarily, in a scenario such as virtual anchor and virtual conferencing, the modulation parameter may be determined in response to a user operation, and the specific value of the modulation parameter may be determined according to user needs.

Specifically, when determining the similarity between the initial left expression coefficient and the initial right expression coefficient using the similarity function, the expression driving apparatus may first calculate the difference between the initial left expression coefficient and the initial right expression coefficient as a variable of the similarity function, and further, may modulate the difference using the modulation parameter, to obtain the modulated difference, where the modulation method here may be, for example, calculating a product of the difference and the modulation parameter, and determining the product as the modulated difference, which is merely an example, and then, the expression driving apparatus may input the modulated difference into the similarity function as a variable of the similarity function for calculation, to obtain the similarity between the initial left expression coefficient and the initial right expression coefficient. Since the specific data of the initial left expression coefficient and the initial right expression coefficient may be in a plurality of dimensions, the corresponding similarity may be calculated for each dimension.

Exemplarily, taking an initial left expression coefficient and an initial right expression coefficient in an $i^{th}$ dimension as an example, the initial left expression coefficient in the $i^{th}$ dimension is denoted as $Left_i$, and the initial right expression coefficient in the $i^{th}$ dimension is denoted as $Right_i$. Taking the similarity function being an exponential function with a decreasing constant e as the base as an example, a similarity between the initial left expression coefficient and the initial right expression coefficient in the $i^{th}$ dimension is denoted as $S(Left_i, Right_i) = exp(-k|Left_i - Right_i|)$, where S represents the similarity, and k represents a modulation parameter corresponding to a current expression coefficient to be processed. For another example, the similarity function may alternatively be a decreasing first-degree function, the similarity between the initial left expression coefficient and the initial right expression coefficient in the i$^{th}$ dimension may be denoted as $S(\text{Left}_i, \text{Right}_i) = (-k|\text{Left}_i - \text{Right}_i|) + 1$, and the value of k may be 1. For still another example, the similarity function may alternatively be a decreasing exponential function, the similarity between the initial left expression coefficient and the initial right expression coefficient in the i$^{th}$ dimension may be denoted as $S(\text{Left}_i, \text{Right}_i) = (-k|\text{Left}_i - \text{Right}_i| + 1)^{|\text{Left}_i - \text{Right}_i|}$, and the value of k may be 1. It can be understood that the similarity function is merely an example, rather than a limitation.

Step 202: Separately adjust the initial left expression coefficient and the initial right expression coefficient based on the similarity, to obtain the target left expression coefficient and the target right expression coefficient.

Specifically, after determining the similarity between the initial left expression coefficient and the initial right expression coefficient, the expression driving apparatus may separately adjust and calculate the initial left expression coefficient and the initial right expression coefficient based on the similarity, to obtain the corresponding target left expression coefficient and target right expression coefficient.

In some embodiments, separately adjusting the initial left expression coefficient and the initial right expression coefficient based on the similarity to obtain the target left expression coefficient and the target right expression coefficient may include: determining a dissimilarity based on the similarity; and performing weighted processing on the initial left expression coefficient and the initial right expression coefficient separately based on the similarity and the dissimilarity, to obtain the target left expression coefficient and the target right expression coefficient. The dissimilarity is a difference between 1 and the similarity.

Specifically, the expression driving apparatus may first determine a first product of the similarity and the initial left expression coefficient and a second product of the similarity and the initial right expression coefficient, and determine a third product of the dissimilarity and the initial left expression coefficient and a fourth product of the dissimilarity and the initial right expression coefficient; and the expression driving apparatus may determine a sum of the second product and the third product as the target left expression coefficient, and determine a sum of the first product and the fourth product as the target right expression coefficient.

Exemplarily, taking the target left expression coefficient and the target right expression coefficient in the i$^{th}$ dimension as an example, the target left expression coefficient may be denoted as:

$$\text{LeftP}_i = S(\text{Left}_i, \text{Right}_i) \times \text{Right}_i + (1 - S(\text{Left}_i, \text{Right}_i)) \times \text{Left}_i$$

The target right expression coefficient may be denoted as:

$$\text{RightP}_i = S(\text{Left}_i, \text{Right}_i) \times \text{Left}_i + (1 - S(\text{Left}_i, \text{Right}_i)) \times \text{Right}_i$$

where LeftP$_i$ represents the target left expression coefficient in the i$^{th}$ dimension, RightP$_i$ represents the target right expression coefficient in the i$^{th}$ dimension, $S(\text{Left}_i, \text{Right}_i)$ represents the similarity between the initial left expression coefficient and the initial right expression coefficient in the i$^{th}$ dimension, $1-S(\text{Left}_i, \text{Right}_i)$ represents the dissimilarity, $S(\text{Left}_i, \text{Right}_i) \times \text{Left}_i$ represents the first product, $S(\text{Left}_i, \text{Right}_i) \times \text{Right}_i$ represents the second product, $(1 - S(\text{Left}_i, \text{Right}_i)) \times \text{Left}_i$ represents the third product, and $(1 - S(\text{Left}_i, \text{Right}_i)) \times \text{Left}_i$ represents the fourth product.

Step 104. Drive a virtual character to show a corresponding expression based on the target left expression coefficient and the target right expression coefficient.

The expression driving apparatus may drive the part corresponding to the coefficient to be processed in the virtual character to show a corresponding expression through the target left expression coefficient and the target right expression coefficient, which can not only avoid a possible expression failure, that is, ensure a driving effect of a specific expression, but can also achieve higher consistency and synchronization of expressions.

In the expression driving solution provided in the embodiment of the present disclosure, the target image is obtained, and the expression of the target object in the target image is recognized to obtain the at least one expression coefficient; the expression coefficient to be processed is extracted from the at least one expression coefficient, and the initial left expression coefficient and the initial right expression coefficient in the to-be-processed expression coefficients are determined; the target left expression coefficient and the target right expression coefficient are generated based on the similarity between the initial left expression coefficient and the initial right expression coefficient; and the virtual character is driven to show the corresponding expression based on the target left expression coefficient and the target right expression coefficient. In the above technical solution, by dividing the expression coefficient to be processed of the expression coefficient into left and right expression coefficients, then generating new left and right expression coefficients based on a similarity between the left and right expression coefficients, and performing expression driving on a virtual character based on the new expression coefficients, post-processing relational constraints on recognized expression coefficients are achieved, which can improve the consistency and synchronization of expressions between related parts of the face during subsequent expression driving using the new expression coefficients, and can avoid a possible expression failure, thereby improving the authenticity of expression driving.

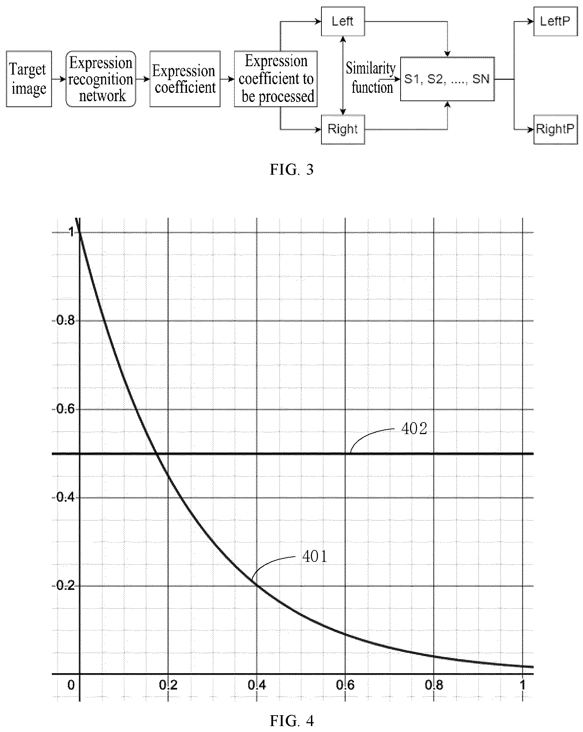

The expression driving method in the embodiment of the present disclosure is further described below using a specific example. Exemplarily, FIG. 3 is a schematic diagram of expression driving according to an embodiment of the present disclosure. As shown in FIG. 3, taking a target object as a user, the figure shows a specific expression recognition process, which may include: processing a target image through an expression recognition network to obtain an expression coefficient; extracting an expression coefficient to be processed from the expression coefficient, and dividing the expression coefficient to be processed into an initial left expression coefficient and an initial right expression coefficient, that is, Left and Right in the figure, where each of data dimensions of Left is in a one-to-one correspondence with each of data dimensions of Right; obtaining similarities S1, S2, ..., and SN between Left and Right using a similarity function; and dynamically adjusting Left and Right using the similarities S1, S2, ..., and SN, to obtain new expression coefficients LeftP and RightP, i.e., the above target left expression coefficient and target right expression coefficient.

In this solution, the expression coefficient to be processed in the expression coefficient is divided into Left and Right. Left corresponds to the expression coefficient for the left half of the face, Right corresponds to the expression coefficient for the right half of the face, and Left and Right are in a one-to-one correspondence. For example, if the first expression coefficient of Left drives a left crooked mouth, the first expression coefficient of Right drives a right crooked mouth. Then, a similarity between each Left and its corresponding Right is calculated, and Left and Right are dynamically adjusted using the similarity, to obtain new LeftP and RightP. When the similarity is larger, the new LeftP and RightP are closer to an average value of the initial Left and Right; and when the similarity is smaller, the new LeftP and RightP are closer to the respective original values of the initial Left and Right, that is, the initial expression coefficients in this case are basically unchanged, to avoid the failure of a specific expression.

Exemplarily, FIG. 4 is a schematic diagram of comparison according to an embodiment of the present disclosure. As shown in FIG. 4, the figure shows a change trend of a fusion parameter as a function of the difference between the initial left expression coefficient and the initial right expression coefficient in the expression driving method of this embodiment of the present disclosure and the related art. The fusion parameter in this embodiment of the present disclosure is the similarity between the initial left expression coefficient and the initial right expression coefficient, and corresponds to a changing curve 401 in the figure. The fusion parameter changes dynamically with the change of the difference between the initial left expression coefficient and the initial right expression coefficient. A larger difference indicates a smaller fusion parameter, which is finally close to 0, and a smaller difference indicates a larger fusion parameter, which is finally close to 1. In the figure, the fusion parameter in the related art corresponds to a line 402 when constraints are imposed using a direct average function. In this case, the fusion parameter is a specific parameter during processing of the average function. The fusion parameter is fixed at 0.5 and unchanged, which leads to the failure of a specific expression such as an expression with one eye closed. The specific expression here may be an expression with a large difference between the initial left expression coefficient and the initial right expression coefficient.

This solution provides an expression driving method, which can perform post-processing relational constraints on expression coefficients recognized from an image, avoid the cost of re-designing a training algorithm, and effectively improve the consistency and synchronization of driven expressions basically without extra time and space overheads. In addition, the method can avoid a possible expression failure through the similarity function, thus improving the authenticity of expression driving.

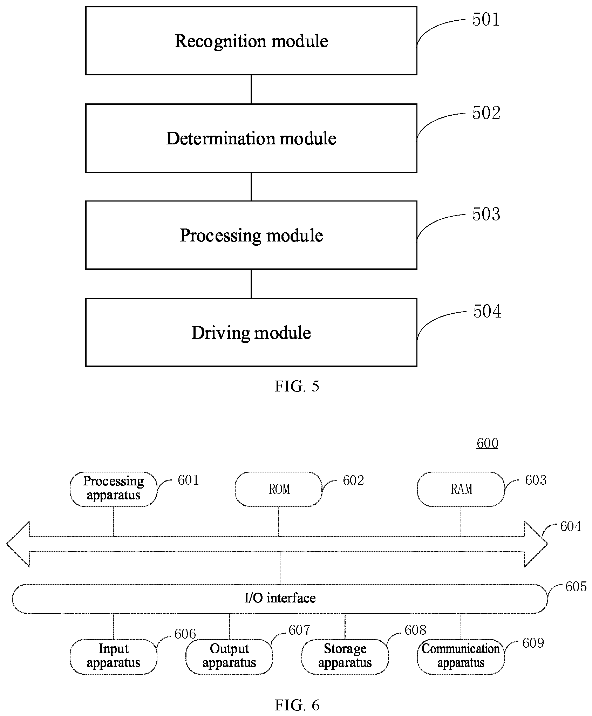

FIG. 5 is a schematic diagram of a structure of an expression driving apparatus according to an embodiment of the present disclosure. The apparatus may be implemented by software and/or hardware, and may generally be integrated into an electronic device. As shown in FIG. 5, the apparatus includes:

a recognition module 501, configured to obtain a target image and recognize an expression of a target object in the target image to obtain at least one expression coefficient;

a determination module 502, configured to extract an expression coefficient to be processed from the at least one expression coefficient, and determine an initial left expression coefficient and an initial right expression coefficient in the expression coefficient to be processed;

a processing module 503, configured to generate a target left expression coefficient and a target right expression coefficient based on a similarity between the initial left expression coefficient and the initial right expression coefficient; and

a driving module 504, configured to drive a virtual character to show a corresponding expression based on the target left expression coefficient and the target right expression coefficient.

Optionally, the recognition module 501 is configured to:
input the target image into a pre-trained expression recognition network to obtain the at least one expression coefficient.

Optionally, the determination module 502 is configured to:
extract an expression coefficient for a preset part from the at least one expression coefficient to obtain the expression coefficient to be processed, where the preset part has two symmetrical subparts, namely, a left subpart and a right subpart.

Optionally, the processing module 503 includes:

a similarity unit configured to determine the similarity between the initial left expression coefficient and the initial right expression coefficient using a similarity function; and

an adjustment unit configured to separately adjust the initial left expression coefficient and the initial right expression coefficient based on the similarity to obtain the target left expression coefficient and the target right expression coefficient.

Optionally, the initial left expression coefficient includes a plurality of pieces of left dimension data, the initial right expression coefficient includes a plurality of pieces of right dimension data, the quantity of the plurality of pieces of left dimension data is the same as the quantity of the plurality of pieces of right dimension data, and each piece of left dimension data corresponds to one piece of right dimension data; and
the similarity between the initial left expression coefficient and the initial right expression coefficient is determined in units of a dimension data pair, there are a plurality of dimension data pairs, and each dimension data pair includes corresponding one piece of left dimension data and one piece of right dimension data.

Optionally, the similarity unit is configured to:

determine a difference between the initial left expression coefficient and the initial right expression coefficient; and

modulate the difference using a modulation parameter, and calculate the modulated difference as a variable of the similarity function to obtain the similarity between the initial left expression coefficient and the initial right expression coefficient.

Optionally, the modulation parameter corresponds to the expression coefficient to be processed, and the similarity function is a decreasing linear function or nonlinear function.

Optionally, the adjustment unit is configured to:

determine a dissimilarity based on the similarity; and

perform weighted processing on the initial left expression coefficient and the initial right expression coefficient separately based on the similarity and the dissimilarity, to obtain the target left expression coefficient and the target right expression coefficient.

The expression driving apparatus according to an embodiment of the present disclosure can perform the expression driving method according to any one of the embodiments of the present disclosure, and has corresponding functional modules and beneficial effects for performing the method.

An embodiment of the present disclosure further provides a computer program product, including a computer program/instruction that, when executed by a processor, implements the expression driving method according to any one of the embodiments of the present disclosure.

FIG. 6 is a schematic diagram of a structure of an electronic device according to an embodiment of the present disclosure. Reference is made specifically to FIG. 6 below, which is a schematic diagram of a structure of an electronic device 600 suitable for implementing the embodiments of the present disclosure. The electronic device 600 in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in FIG. 6 is merely an example, and shall not impose any limitation on the function and scope of use of the embodiments of the present disclosure.

As shown in FIG. 6, the electronic device 600 may include a processing apparatus (e.g., a central processing unit or a graphics processing unit) 601 that may perform a variety of appropriate actions and processing in accordance with a program stored in a read-only memory (ROM) 602 or a program loaded from a storage apparatus 608 into a random access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a tape and a hard disk; and a communication apparatus 609. The communication apparatus 609 may allow the electronic device 600 to perform wireless or wired communication with other devices to exchange data. Although FIG. 6 shows the electronic device 600 with various apparatuses, it should be understood that the electronic device 600 is not required to implement or include all of the shown apparatuses. More or fewer apparatuses may alternatively be implemented or provided.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 609, installed from the storage apparatus 608, or installed from the ROM 602. When the computer program is executed by the processing apparatus 601, the above-mentioned functions defined in the expression driving method according to the embodiments of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: obtain a target image, and recognize an expression of a target object in the target image to obtain at least one expression coefficient; extract an expression coefficient to be processed from the at least one expression coefficient, and determine an initial left expression coefficient and an initial right expression coefficient in the expression coefficient to be processed; generate a target left expression coefficient and a target right expression coefficient based on a similarity between the initial left expression coefficient and the initial right expression coefficient; and drive a virtual character to show a corresponding expression based on the target left expression coefficient and the target right expression coefficient.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a unit does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It can be understood that before the use of the technical solutions disclosed in the embodiments of the present disclosure, the user shall be informed of the type, range of use, use scenarios, etc., of information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

**Claims**

1. An expression driving method, comprising:

   obtaining a target image and recognizing an expression of a target object in the target image to obtain at least one expression coefficient;

   extracting an expression coefficient to be processed from the at least one expression coefficient, and determining an initial left expression coefficient and an initial right expression coefficient in the expression coefficient to be processed;

   generating a target left expression coefficient and a target right expression coefficient based on a similarity between the initial left expression coefficient and the initial right expression coefficient; and

   driving a virtual character to show a corresponding expression based on the target left expression coefficient and the target right expression coefficient.

2. The method according to claim 1, wherein recognizing the expression of the target object in the target image to obtain at least one expression coefficient comprises:
   inputting the target image into a pre-trained expression recognition network to obtain the at least one expression coefficient.

3. The method according to claim 1, wherein extracting the expression coefficient to be processed from the at least one expression coefficient comprises:
   extracting an expression coefficient for a preset part from the at least one expression coefficient, to obtain the expression coefficient to be processed, wherein the preset part has two symmetrical subparts including a left subpart and a right subpart.

4. The method according to claim 1, wherein generating the target left expression coefficient and the target right expression coefficient based on the similarity between the initial left expression coefficient and the initial right expression coefficient comprises:

   determining the similarity between the initial left expression coefficient and the initial right expression coefficient using a similarity function; and

   separately adjusting the initial left expression coefficient and the initial right expression coefficient based on the similarity to obtain the target left expression coefficient and the target right expression coefficient.

5. The method according to any one of claims 1 to 4, wherein the initial left expression coefficient comprises a plurality of pieces of left dimension data, the initial right expression coefficient comprises a plurality of pieces of right dimension data, the quantity of the plurality of pieces of left dimension data is the same as the quantity of the plurality of pieces of right dimension data, and each piece of left dimension data corresponds to one piece of right dimension data; and
   the similarity between the initial left expression coefficient and the initial right expression coefficient is determined in units of a dimension data pair, there are a plurality of dimension data pairs, and each dimension data pair comprises corresponding one piece of left dimension data and one piece of right dimension data.

6. The method according to claim 4, wherein determining the similarity between the initial left expression coefficient and the initial right expression coefficient using the similarity function comprises:

   determining a difference between the initial left expression coefficient and the initial right expression coefficient; and

   modulating the difference using a modulation parameter and calculating the modulated difference as a variable of the similarity function to obtain the similarity between the initial left expression coefficient and the initial right expression coefficient.

7. The method according to claim 6, wherein the modulation parameter corresponds to the expression coefficient to be processed, and the similarity function is a decreasing linear function or nonlinear function.

8. The method according to claim 4, wherein separately adjusting the initial left expression coefficient and the initial right expression coefficient based on the similarity to obtain the target left expression coefficient and the target right expression coefficient comprises:

determining a dissimilarity based on the similarity; and

performing weighted processing on the initial left expression coefficient and the initial right expression coefficient separately based on the similarity and the dissimilarity to obtain the target left expression coefficient and the target right expression coefficient.

9. An expression driving apparatus, comprising:

a recognition module, configured to obtain a target image, and recognize an expression of a target object in the target image to obtain at least one expression coefficient;

a determination module, configured to extract an expression coefficient to be processed from the at least one expression coefficient, and determine an initial left expression coefficient and an initial right expression coefficient in the expression coefficient to be processed;

a processing module, configured to generate a target left expression coefficient and a target right expression coefficient based on a similarity between the initial left expression coefficient and the initial right expression coefficient; and

a driving module, configured to drive a virtual character to show a corresponding expression based on the target left expression coefficient and the target right expression coefficient.

10. An electronic device, comprising:

a processor; and

a memory configured to store instructions executable by the processor, wherein

the processor is configured to read the executable instructions from the memory, and execute the instructions to implement the expression driving method according to any one of claims 1 to 8.

11. A computer-readable storage medium having a computer program stored therein, wherein the computer program is used to perform the expression driving method according to any one of claims 1 to 8.

Obtain a target image, and recognize an expression of a target object in the target image to obtain at least one expression coefficient — 101

Extract an expression coefficient to be processed from the at least one expression coefficient, and determine an initial left expression coefficient and an initial right expression coefficient in the expression coefficient to be processed — 102

Generate a target left expression coefficient and a target right expression coefficient based on a similarity between the initial left expression coefficient and the initial right expression coefficient — 103

Drive a virtual character to show a corresponding expression based on the target left expression coefficient and the target right expression coefficient — 104

FIG. 1

Determine a similarity between an initial left expression coefficient and an initial right expression coefficient using a similarity function — 201

Separately adjust the initial left expression coefficient and the initial right expression coefficient based on the similarity, to obtain a target left expression coefficient and a target right expression coefficient — 202

FIG. 2

FIG. 3

FIG. 4

Recognition module — 501

Determination module — 502

Processing module — 503

Driving module — 504

FIG. 5

600

Processing apparatus — 601    ROM — 602    RAM — 603

— 604

— 605

I/O interface

Input apparatus — 606    Output apparatus — 607    Storage apparatus — 608    Communication apparatus — 609

FIG. 6

## INTERNATIONAL SEARCH REPORT

| International application No. |
|---|
| **PCT/CN2023/132455** |

| A. | CLASSIFICATION OF SUBJECT MATTER |
|---|---|

G06T 13/40(2011.01)i; G06V 40/16(2022.01)i

According to International Patent Classification (IPC) or to both national classification and IPC

| B. | FIELDS SEARCHED |
|---|---|

Minimum documentation searched (classification system followed by classification symbols)

IPC: G06T G06V

Documentation searched other than minimum documentation to the extent that such documents are included in the fields searched

Electronic data base consulted during the international search (name of data base and, where practicable, search terms used)

CNTXT, CNABS, ENTXT, ENTXTC, DWPI, CNKI: 表情, 图像, 系数, 左, 右, 相似度, 相似性, 差异, 训练, 模型; expressio n, image, picture, coefficient, left, right, similarity, difference, training, model

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114821734 A (BEIJING WODONG TIANJUN INFORMATION TECHNOLOGY CO., LTD. et al.) 29 July 2022 (2022-07-29) description, paragraphs 37-128 | 1-11 |
| Y | CN 114078275 A (GUANGZHOU HUYA TECHNOLOGY CO., LTD.) 22 February 2022 (2022-02-22) description, paragraphs 66-155 | 1-11 |
| A | CN 108875633 A (MEGVII TECHNOLOGY LTD.) 23 November 2018 (2018-11-23) entire document | 1-11 |
| A | CN 114724228 A (BEIJING DAJIA INTERNET INFORMATION TECHNOLOGY CO., LTD.) 08 July 2022 (2022-07-08) entire document | 1-11 |
| A | CN 115272570 A (BOE TECHNOLOGY GROUP CO., LTD.) 01 November 2022 (2022-11-01) entire document | 1-11 |

☑ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 January 2024** | **02 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/132455** |

| C. | DOCUMENTS CONSIDERED TO BE RELEVANT | |
| --- | --- | --- |
| Category* | Citation of document, with indication, where appropriate, of the relevant passages | Relevant to claim No. |
| PX | CN 116258800 A (BEIJING BYTEDANCE NETWORK TECHNOLOGY CO., LTD.) 13 June 2023 (2023-06-13)<br>claims 1-11 | 1-11 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 114821734 | A | 29 July 2022 | None | | | |
| CN | 114078275 | A | 22 February 2022 | None | | | |
| CN | 108875633 | A | 23 November 2018 | US | 2019384967 | A1 | 19 December 2019 |
| | | | | US | 10832039 | B2 | 10 November 2020 |
| | | | | CN | 108875633 | B | 08 February 2022 |
| CN | 114724228 | A | 08 July 2022 | None | | | |
| CN | 115272570 | A | 01 November 2022 | None | | | |
| CN | 116258800 | A | 13 June 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211491847